# EUROPEAN PATENT APPLICATION

(11) **EP 2 533 474 A1**
(43) Date of publication of application: **12.12.2012**
(21) Application number: 10845125.3
(22) Date of filing: 31.12.2010
(51) Int. Cl.: H04L 12/56

(54) **METHOD, APPARATUS AND SYSTEM FOR FORWARDING DATA**

(30) Priority: 02.02.2010 CN 201010111381
(71) Applicant: Huawei Technologies Co., Ltd., Shenzhen, Guangdong 518129 (CN)
(72) Inventor: HE, Luyou, Shenzhen Guangdong 518129 (CN); SHI, Tijun, Shenzhen Guangdong 518129 (CN); ZHAO, Fenghua, Shenzhen Guangdong 518129 (CN); ZHANG, Jinhui, Shenzhen Guangdong 518129 (CN)
(74) Representative: Haley, Stephen
(86) International application number: PCT/CN2010/080559
(87) International publication number: WO 2011/095042

(57) **Abstract**

The present invention provides a method, an apparatus and a system for forwarding data, applied to a layer 2 virtual private network system, where the layer 2 virtual private network system includes a service provider network edge router PE and a customer edge device CE, and an active PE and a standby PE form a cross-node redundancy group RG. The method includes: automatically establishing a data channel for link protection between the active PE and the standby PE; monitoring a link for current data transmission; and when the link for current data transmission fails, forwarding data through the standby PE and the data channel for link protection. Through the present invention, the link delay can be reduced, and packet loss is prevented.

## Description

### FIELD OF THE INVENTION

The present invention relates to the field of communications technologies, and in particular, to a method, an apparatus and a system for forwarding data.

### BACKGROUND OF THE INVENTION

In a VPLS (Virtual Private Lan Service, virtual private lan service) of an L2VPN (layer 2 virtual private network), a system is formed by a PE (provider edge, service provider edge device) and a CE (customer edge, customer edge device).

To ensure that data is normally forwarded between the PE and the CE when a failure occurs, the ICCP protocol (Inter-Chassis Communication Protocol, inter-chassis communication protocol) is used in the prior art. In this protocol, two or more devices may form a cross-node redundancy group (Redundancy Group, RG), and data of the two or more devices in the RG can be synchronized through the ICCP protocol to form a dual-homed network. In the dual-homed network, links formed between one device and another two devices are mutually redundant, and when one of the links fails, the other link may be switched to.

For the VPLS, in the case of using the ICCP protocol, two PEs may form an RG, and PE nodes in the RG provide a dual-homed capability to an independent device or the whole network. In this way, when a link formed by an active PE fails, a link formed by a standby PE may be switched to, so as to protect the links.

During link switching, the standby link needs to be activated, and merely after the standby link is activated, data can be forwarded through the standby link. It can be seen that, in the prior art, the standby link can be switched to when the current link fails, but data forwarding continuity cannot be ensured as the switching process needs a certain period of time, resulting in the link delay or even packet loss.

### SUMMARY OF THE INVENTION

The present invention provides a method, an apparatus and a system for forwarding data, which can reduce the link delay and prevent packet loss.

An embodiment of the present invention provides a method for forwarding data, applied to a layer 2 virtual private network system, where the layer 2 virtual private network system includes a service provider network edge router PE and a customer edge device CE, and an active PE and a standby PE form a cross-node redundancy group RG. The method includes:
automatically establishing a data channel for link protection between the active PE and the standby PE;
monitoring a link for current data transmission; and
when the link for current data transmission fails, forwarding data through the standby PE and the data channel for link protection.

The forwarding the data through the standby PE and the data channel for link protection when the link for current data transmission fails includes:
if downlink data needs to be forwarded, forwarding the downlink data to the standby PE through the data channel, so that the standby PE transmits the downlink data to the CE; and
if uplink data needs to be forwarded, receiving the uplink data forwarded by the standby PE through the data channel, and forwarding the uplink data to a remote PE.

An embodiment of the present invention provides an apparatus for forwarding data, applied to a layer 2 virtual private network system, where the layer 2 virtual private network system includes a service provider network edge router PE and a customer edge device CE, and an active PE and a standby PE form a cross-node redundancy group RG. The apparatus includes:
a channel establishing unit, configured to automatically establish a data channel for link protection between the active PE and the standby PE;
a monitoring unit, configured to monitor a link for current data transmission; and a forwarding unit, configured to forward data through the standby PE and the data channel for link protection when the link for current data transmission fails.

When a link between the CE and the active PE fails, the forwarding unit includes:
a first forwarding subunit, configured to, if downlink data needs to be forwarded, forward the downlink data to the standby PE through the data channel, so that the standby PE transmits the downlink data to the CE; and
a second forwarding subunit, configured to, if uplink data needs to be forwarded, receive the uplink data forwarded by the standby PE through the data channel, and forward the uplink data to a remote PE.

An embodiment of the present invention further provides a system for forwarding data, including a service provider network edge router PE and a customer edge device CE, where an active PE and a standby PE form a cross-node redundancy group RG. The system includes:
a channel establishing unit, configured to automatically establish a data channel for link protection between the active PE and the standby PE;
the active PE, configured to monitor a link for current data transmission, and forward data through the standby PE and the data channel for link protection when the link for current data transmission fails; and
the standby PE, configured to forward received data according to a current link state, so as to assist the active PE in completing data forwarding.

When a link between the CE and the active PE fails, and downlink data needs to be forwarded, the active PE includes a first forwarding unit, configured to forward the downlink data to the standby PE through the data channel; and the standby PE includes a second forwarding unit, configured to forward the downlink data to the CE through a link between the CE and the standby PE.

When the link between the CE and the active PE fails, and uplink data needs to be forwarded, the standby PE includes a third forwarding unit, configured to receive the uplink data forwarded by the CE through the link between the CE and the standby PE, and forward the uplink data to the active PE through the data channel; and the active PE includes a fourth forwarding unit, configured to forward the uplink data to a remote PE through a link between the remote PE and the active PE.

In the present invention, the data channel for link protection is automatically established between the active PE and the standby PE, so that the data may be forwarded directly through the standby PE and the data channel for link protection when a link for current data transmission fails. In this way, even if the switching is not completed, normal data forwarding can be ensured, thereby reducing the link delay and preventing packet loss.

### BRIEF DESCRIPTION OF THE DRAWINGS

FIG. 1 is a schematic structural diagram of a VPLS system using the ICCP protocol;
FIG. 2 is a schematic structural diagram of another VPLS system using the ICCP protocol;
FIG. 3 is a flow chart of a method provided by an embodiment of the present invention;
FIG. 4 is a schematic structural diagram of a VPLS system in a method provided by an embodiment of the present invention;
FIG. 5-1 and FIG. 5-2 are schematic diagrams of a format of a packet used during the establishment of a data channel according to an embodiment of the present invention;
FIG. 6 is a schematic diagram of an apparatus provided by an embodiment of the present invention;
FIG. 7 is a schematic diagram of another apparatus provided by an embodiment of the present invention; and
FIG. 8 is a schematic diagram of a system provided by an embodiment of the present invention.

### DETAILED DESCRIPTION OF THE EMBODIMENTS

In order to make the objectives, technical solutions, and advantages of the present invention more comprehensible, the present invention is described in further detail below with reference to the accompanying drawings and embodiments. It should be understood that, the specific embodiment described herein are merely for explaining the present invention, but are not intended to limit the present invention.

For ease of understanding, some concepts involved in the embodiments of the present invention are first introduced.

A PE refers to an edge router in a backbone network that is connected to a CE, and is mainly responsible for VPN service access and completing mapping and forwarding a packet from a private network to a public network tunnel and from the public network tunnel to the private network.

A CE is a user equipment that is directly connected to a service provider, and accesses a system through a layer 2 link such as Ethernet, an ATM or an FR.

The PE may be further classified into a UPE (user facing provider edge) and an NPE (network facing provider edge).

The UPE is also referred to as a near end PE device that is a PE device close to a customer side and functions as a convergence device for a user to access the VPN.

The NPE is further referred to as a remote PE device that functions as a core PE device in the network, is located at an edge of a core area of the VPLS network, and provides a VPLS transparent transmission service between core networks.

The UPE needs to transmit, to the NPE, a layer 2 data frame sent from the CE, and transmit a layer 2 link frame restored or regenerated by the NPE to the CE.

Generally, a link between the CE and the UPE is referred to as an attachment circuit (Attachment Circuit, AC), and a connection established through L2VPN signaling between the UPE and the NPE is referred to as a pseudowire (Pseudowire, PW).

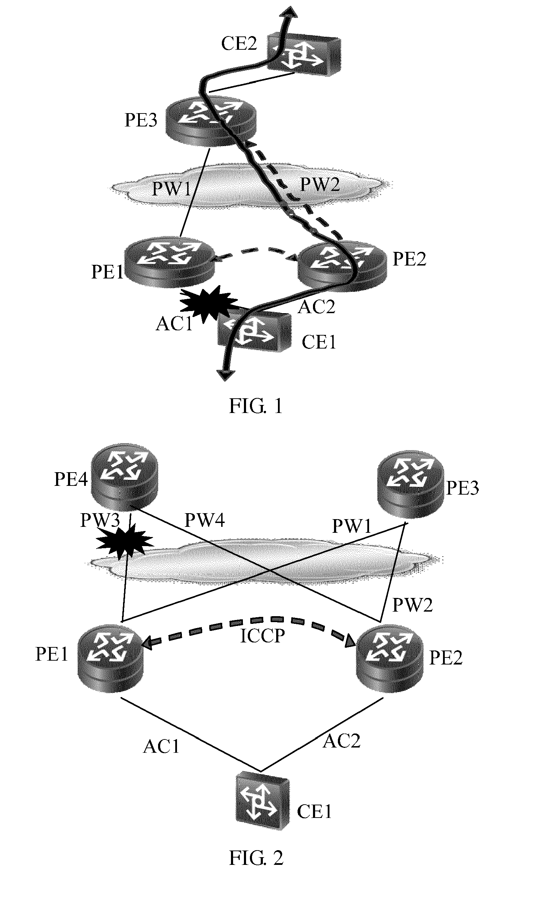

In the prior art, when inter-chassis data synchronization is performed through the ICCP protocol, TRUNK information at an AC side may be synchronized, and when the AC fails, link protection can be achieved by switching the AC and the PW. Referring to FIG. 1, a schematic diagram illustrating how a CE device accesses a VPLS network in a dual-homed manner is provided, where CE1 is connected to PE1 and PE2 in a dual-homed manner, so the link formed by AC1 and PW1 and the link formed by AC2 and PW2 are mutually redundant. If AC1 on PE1 is in an active state, because the AC determines whether a PW is active or standby, the corresponding PW1 is in an active state. If AC1 fails during a process that data is forwarded from CE1 to PE3, CE1 may sense the failure immediately, and then notifies PE2 to switch the AC, that is, switch AC2 to an active state; and after receiving the notification of the AC, PE2 switches the PW, that is, switches PW2 to an active state. After switching, an uplink path is a path where CE1-AC2-PE2-PW2-PE3 is located.

The method can ensure that data forwarding can be implemented through another path when AC1 fails, but data forwarding is interrupted at the moment when AC1 fails, and is not continued until the switching is completed (when PW2 is activated, that is, after PW2 is switched to an active state), and then data forwarding is performed through another path after the switching. It can be seen that, in the process from the beginning of the switching to the completion of switching, data cannot be normally forwarded, causing temporary interruption in data forwarding.

In addition, if AC1 fails, packet loss of the downlink data (data from PE3 to CE1 through PE1) may occur. Specifically, because PE3 cannot sense the failure of AC1 immediately, before the completion of switching, PE3 may still forward the data to PE1 through PW1, but at this time, AC1 fails and cannot normally forward the data to CE1, resulting in packet loss of data of this part. Certainly, packet loss can be prevented in a reliable transmission protocol such as the TCP, where the data of this part can only be re-forwarded to CE1 through PW2 and AC2 after the completion of switching, so the data of this part that has been transmitted to PE1 but is not forwarded to CE1 results in waste actually.

Certainly, in the schematic diagram shown in FIG. 1, if PW1 fails, the similar situation may occur both for uplink data and downlink data. For example, as for uplink data, because CE1 cannot sense the failure of PW1 immediately, CE1 may still forward the data to PE1 through AC1. However, because PW1 fails, the data cannot be forwarded to PE3, resulting in packet loss of the data of this part. For downlink data, because PW1 fails, before the completion of switching, PW2 is in a blocked state, so the data cannot be forwarded through PW2. Therefore, PE3 can merely continue to forward the data after the completion of switching.

In another case, greater problems may occur. For example, in a network shown in FIG. 2, CE1 is dual-homed to PE1 and PE2 for redundant connectivity, and meanwhile, PE3 and PE4 are respectively dual-homed to PE1 and PE2. At this time, two PWs, namely, PW1 and PW3, are connected to PE1; and two PWs, namely, PW2 and PW4, are connected to PE2. A link formed by AC1 and PW1 and a link formed by AC2 and PW2 are mutually redundant links from CE1 to PE3, and a link formed by AC1 and PW3 and a link formed by AC2 and PW4 are mutually redundant links from CE1 to PE4. It is assumed that, in a normal case, a forwarding paths of uplink data are CE1-PE1-PE3 and CE1-PE1-PE4 respectively. Because in the current ICCP protocol, merely when all PWs connected to one PE fail, the other PE can be switched to. Therefore, through the data forwarding path, merely when PW3 fails (PW1 is normal), PE2 is not automatically switched to for the data forwarding. Meanwhile, because AC1 is normal, AC2 is not switched to neither, so that data between PE4 and CE1 cannot be normally forwarded.

It can be seen that, in the prior art, when AC or PW fails, the data forwarding efficiency is reduced, and even normal data forwarding cannot be performed.

In view of the above cases, to solve the problems occurring when AC or PW fails, embodiments of the present invention provide corresponding solutions.

An embodiment of the present invention provides a method for forwarding data, applied to a layer 2 virtual private network system, where the layer 2 virtual private network system includes a PE and a CE, and two PEs form an RG. For ease of description, in the RG, the PE in an active state is referred to as an active PE, and the PE in a standby state is referred to as a standby PE.

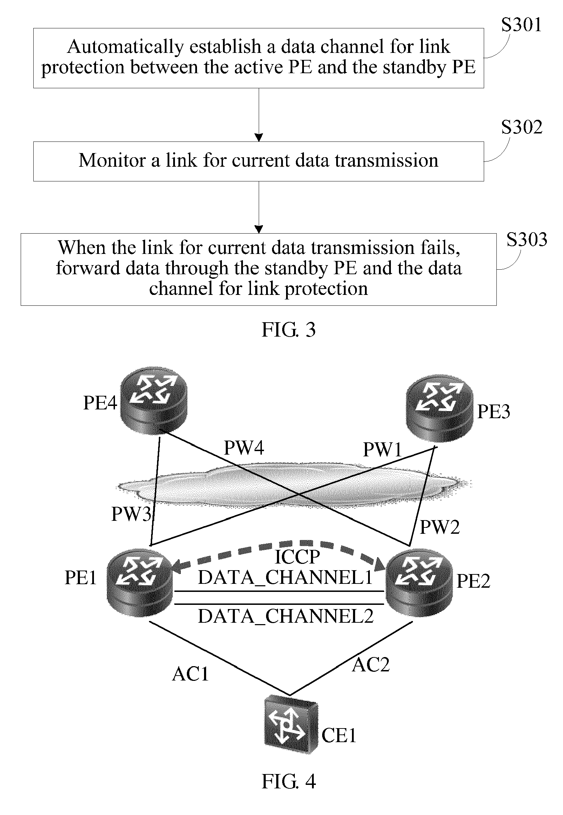

Referring to FIG. 3, the method for forwarding data provided by the embodiment of the present invention includes the following steps:
S301: Automatically establish a data channel for link protection between the active PE and the standby PE.

First, a data channel for link protection needs to be established between the active PE and the standby PE. In the embodiment of the present invention, the process of establishing the data channel for link protection is automatically implemented by PE1 and PE2. In order to implement the process of automatically establishing the data channel, the existing ICCP protocol is extended in the embodiment of the present invention. In other words, a data channel for link protection between the active PE and the standby PE is established through the extended ICCP.

The data channel for link protection may be established in advance before a link failure occurs, and may also be temporarily established when a link failure occurs. In the following, taking FIG. 1 as an example, the case that the data channel for link protection is established in advance is briefly introduced. Because in actual applications, in order to provide high bandwidth, great throughput and restorability, the LACP (Link Aggregation Control Protocol, link aggregation control protocol) is generally used between the CE and the PE. In this way, multiple ports may be connected in parallel, and multiple physical connections are considered as a single logical connection for processing. During the establishment of the layer 2 virtual private network system, if the LACP protocol is used between the CE and the PE, it means that some ports between CE1 and PE1 are aggregated together, and some ports between CE1 and PE2 are also aggregated together. Then, between PE1 and PE2, the ICCP protocol needs to be used to exchange port aggregation information, that is, to inform the peer end about the port aggregation information of the local end. In addition, because a PW needs to be established between PE1 and PE3 and between PE2 and PE3, PW information needs to be exchanged between PE1 and PE2 through the ICCP protocol.

It can be seen from the above description that, a channel for execution of the ICCO protocol exists between PE1 and PE2, that is, information may be mutually sent between PE1 and PE2 through the ICCP channel. With such a feature, when the port aggregation information or PW information is exchanged between PE1 and PE2, a request packet of a preset format is carried through the extended ICCP protocol, so as to automatically establish the data channel for customer link protection. For example, PE1 may forward a request packet for establishing the data channel for customer link protection to PE2, and after PE2 receives the request packet, if PE2 supports establishing the data channel, PE2 returns corresponding response information; then, the data channel for customer link protection is established between PE1 and PE2.

Specifically, the data channel for link protection may be established by using an in-band or an out-of-band manner, where the in-band manner refers to that the data channel is consistent with the path for execution of the ICCP protocol, that is, the ICCP channel is used as the data channel for customer link protection. In such case, different purposes of the channel may be distinguished through vlan id.

The out-of-band manner refers to that the data channel and the path for execution of the ICCP protocol are independent of each other, and the out-of-band data channel may be implemented in various forms, for example, a PW or an IP channel. For example, when the out-of-band data channel is implemented in the form of an IP channel, the specific process is as follows: after determining through negotiation that a data channel for link protection is established, PE1 and PE2 may reserve ports for the data channel for link protection according to the use condition of their respective ports of PE1 and PE2. For example, if port 1 of PE1 is available, the port 1 may be reserved, and meanwhile, if port 2 of PE2 is available, the port 2 may be reserved; and then, information of the reserved ports is exchanged between PE1 and PE2, and the data channel for link protection may be established in this way, where the data channel is a channel between the port 1 of PE1 and the port 2 of PE2.

### S302: Monitor a link for current data transmission.

An execution subject of this step is the active PE, that is, a PE in an active state. The link for current data transmission is formed by the AC and the PW in the active state, so the monitoring process may include monitoring the AC, and may also include monitoring the PW. No matter the

AC or the PW fails, the active PE can sense the failure immediately.

S303: When the link for current data transmission fails, data is forwarded through the standby PE and the data channel for link protection.

The execution subject of the step is still the active PE. Once the link for current data transmission fails (regardless of the AC or the PW), the data may be forwarded directly through the standby PE and the data channel for link protection, without waiting for the completion of the switching process.

It should be noted that, as described above, because the data channel for link protection may be established in advance or may be established when a link failure occurs, an execution sequence for step S301 and step S302 is not fixed, and in a case that the data channel for link protection is temporarily established, the data channel for link protection may be established when the link for current data transmission fails, and then the data is forwarded through the standby PE and the data channel for link protection.

In addition, it should be noted that, when a link failure occurs, in the case that the data channel for link protection is temporarily established, because a certain period of time is required for the process of establishing the data channel, link interruption may still be caused before the completion of establishing the data channel. However, because PE1 may be connected to PE2 in a direct connection manner, the time required for establishing the data channel for link protection between PE1 and PE2 is generally less than the time required for link switching, and the purpose of reducing link delay is achieved to a certain degree.

When the AC or the PW fails, specific processing methods of the active PE are slightly different, which are described in detail below.

When the AC fails, for downlink data, the downlink data may be forwarded to the standby PE through the data channel, so that the standby PE transmits the downlink data to the CE. If uplink data needs to be forwarded, the uplink data forwarded by the standby PE through the data channel is received, and the uplink data is forwarded to a remote PE.

Taking FIG. 1 as an example, it is assumed that, before a failure occurs, AC1 and PW1 are in an active state, PE3 is the remote PE, PE1 is the active PE, and PE2 is the standby PE. In the case that AC1 fails, for downlink data (data sent from PE3), PE1 can normally receive the downlink data through PW1, but at this time, AC1 fails. Therefore, PE1 may forward the received downlink data to PE2 through the data channel between PE1 and PE2. Meanwhile, because CE1 can sense the failure of AC1 immediately and switch AC1 to AC2 at once, that is, AC2 is activated at this time. Therefore, after PE2 receives the downlink data forwarded by PE1 through the data channel, PE2 may forward the downlink data to CE1 through AC2.

For the uplink data (data sent from CE1), because when AC1 fails, CE1 can sense the failure immediately and activate AC2, the uplink data may be forwarded to PE2 directly through AC2 (at this time, switching is not completed). After PE2 receives the uplink data of CE1, because PW2 is not activated at this time, the uplink data is forwarded to PE1 directly through the data channel. After PE1 receives the uplink data forwarded by PE2 through the data channel, because PW1 is still available before the completion of switching, the uplink data may be forwarded to PE3 through PW1.

In addition, when the PW fails, different from the situation when the AC fails, activation of the link (that is, a PW in a standby state currently) between the remote PE and the standby PE needs to be first triggered; and then if the downlink data needs to be forwarded, the uplink data forwarded by the standby PE through the data channel is received, and the downlink data is forwarded to the CE, where the downlink data is forwarded to the standby PE by the remote PE through the link between the remote PE and the standby PE. If uplink data needs to be forwarded, the uplink data is forwarded to the standby PE through the data channel, so that a peer PE forwards the uplink data to the remote PE through the link between the remote PE and the standby PE.

Still taking FIG. 1 as an example, it is assumed that, before a failure occurs, AC1 and PW1 are in an active state, PE3 is the remote PE, PE1 is the active PE, and PE2 is the standby PE. When PW1 fails, downlink data (data sent from PE3) cannot be forwarded through PW1, and PW2 is in a blocked state currently and is not available. Therefore, PW2 needs to be activated first; after PW2 is activated, PE3 may forward the downlink data to PE2 through PW2; and after PE2 receives the downlink data, because AC2 is in a blocked state, the downlink data may be forwarded to PE1 through the data channel. Because AC1 is still available, PE1 may forward the received downlink data to CE1 through AC1.

For the uplink data, because CE1 cannot sense the failure of PW1 immediately, AC2 is not switched to immediately, and the uplink data is forwarded to PE1 through AC1. At this time, because PW1 fails, PE1 may forward the uplink data to PE2 through the data channel. After PE2 receives the uplink data, PE2 needs to forward the uplink data to PE3 through PW2. Therefore, in this case, PW2 still needs to be activated, and after activation, PE2 can forward the uplink data to PE3 through PW2.

It should be noted that, after PE1 or PE2 receives the data through the data channel for link protection, whether the data is uplink data or downlink data needs to be determined, so as to determine a direction to which the data is forwarded. For the convenience of determination, when a data channel is established between PE1 and PE2, a data channel for uplink protection and a data channel for downlink protection may be respectively established. In this way, the uplink data may be forwarded to the standby PE through the data channel for uplink protection, and the downlink data may be forwarded to the standby PE through the data channel for downlink protection. That is, before a PE forwards data to a peer PE through a data channel, the PE is informed of whether the received data is uplink data or downlink data. In this way, when the PE forwards the data to the peer PE through the data channel, the PE may select a corresponding data channel for forwarding the data according to a source of the data to be forwarded. Meanwhile, for the peer PE, if the data is received through a data channel for uplink protection, it is determined that the data is uplink data; and if the data is received through a data channel for downlink protection, it is determined that the data is downlink data.

Certainly, in actual applications, during a process, the data channel for link protection may fail, and at this time, a standby data channel for the data channel for link protection may be further established between the active PE and the standby PE, that is, the data channels for link protection may also work in an active/standby mode. In this way, when one of the data channels for link protection fail, the data may be forwarded through the standby data channel. Multiple standby data channels may exist.

It should be noted that, in the manner of automatically establishing the data channel in the embodiment of the present invention, a policy of optimizing QoS may be used. For example, when the active path is normal (in the case that the AC and the PW in the active state do not fail), a bandwidth of the data channel may be low, so as to save the bandwidth resource. Once the active path fails, the bandwidth of the data channel is automatically adjusted to a bandwidth the same as that of the active path.

The above description is based on the case in FIG. 1, and by using the method provided by the embodiment of the present invention, the special case in FIG. 2 described above may also be correspondingly solved. Specifically, referring to FIG. 4, between PE1 and PE2, a data channel DATA_CHANNEL1 is established to protect the uplink, and another data channel DATA_CHANNEL2 is established to protect the downlink. DATA_CHANNEL1 may be established when aggregation link information is exchanged between PE1 and PE2, and DATA_CHANNEL2 may be established when PW information is exchanged between PE1 and PE2 through the ICCP protocol.

After the data channels for uplink protection and downlink protection are established, it can be ensured that data can be normally forwarded when the AC or the PW fails. In specific implementation, when the AC or the PW fails, specific conditions may be slightly different for the uplink and the downlink, which are described in detail below.

First, in FIG. 4, it is assumed that AC1 is in an active state, correspondingly, PW3 and PW1 are in an active state. Therefore, the uplink is AC1-PW3 and AC1-PW1, and the downlink is PW3-AC1 and PW1-AC1.

In a first case, when the AC1 fails, for the uplink data, because CE1 can sense the failure of AC1 in time, CE1 may initiate switching from AC1 to AC2, and then data is forwarded to PE2 through AC2. At this time, because PE2 initiates the switching of PW after receiving switching information from CE1, the switching may not be completed, and at this time, PE2 may forward data to PE1 through the data channel DATA_CHANNEL1 established for the AC. Because the switching of the PW is not completed, and PW3 and PW1 are still in an available state, PE1 may forward the data to PE4 through PW3 and PW1 after receiving the data sent through DATA-CHANNEL1. Correspondingly, the used links are respectively as follows: AC2- DATA_CHANNEL1-PW3 and AC2- DATA_CHANNEL1-PW1.

Because the data is forwarded to PE1 through DATA_CHANNEL1, PE1 may be informed of that the data is sent from an AC side, and accordingly forward the data to a PW side. Certainly, after switching of the PW is completed, the data may be forwarded by using the links after switching, AC2-PW4 and AC2-PW2, rather than through DATA_CHANNEL1.

It can be seen that, through the method in the embodiment of the present invention, data can be forwarded to PE2 through AC2 merely after switching from AC1 to AC2, without waiting for the completion of PW switching by PE2, thereby improving the data forwarding efficiency.

In a second case, when AC1 fails, for the downlink data, CE1 can sense the failure immediately, and switch AC1 to AC2 in time. However, PE3 and PE4 cannot sense the failure of AC1 in time, so before the completion of switching, the data is still forwarded to PE1 through PW3 and PW1. At this time, because PE1 can sense the failure of AC1, data may be forwarded to PE2 through DATA_CHANNEL2. After receiving the data through DATA_CHANNEL2, PE2 may forward the data to CE1 through AC2, because AC2 is in an available state. Correspondingly, the used links are as follows: PW3-DATA_CHANNEL2-AC2 and PW1-DATA_CHANNEL2-AC2.

It should be noted that, because the data is forwarded to PE2 through DATA_CHANNEL2, PE2 may be informed of that the data is sent from a PW side, and the data is forwarded to an AC side accordingly. Certainly, after switching of the PW is completed, the data may be forwarded by using the links after switching, PW4-AC2 and PW2-AC2, rather than through DATA_CHANNEL2.

It can be seen that, through the method in the embodiment of the present invention, when the AC fails, data interruption does not occur, and the data forwarding efficiency is not affected.

In a third case, if PW3 fails, for the uplink data, because PW1 does not fail, switching between active and standby links is not initiated according to the ICCP protocol. At this time, because CE1 does not sense the failure of PW4, CE1 still forwards data to PE1. PE1 can sense the failure of PW4, so PE1 forwards the data that is required to be forwarded to PE4 to PE2 through DATA_CHANNEL1. After receiving the data, because PE2 needs to forward the data to PE4 through PW4, PW4 needs to be activated in advance, so that the PW4 is in an available state. Certainly, if the data needs to be forwarded to PE3, PE1 may further forward the data to PE3 through PW 1.

It can be seen that, through the method in the embodiment of the present invention, when a PW connected to the PE fails, the data may be further normally forwarded.

In a fourth case, when PW3 fails, because PW1 does not fail, switching is not initiated. However, because PE4 can sense the failure of PW3, for the downlink data, PE4 may forward the data to PE2 through PW4. Certainly, because PW4 is in a standby state, PW4 needs to be activated in advance, and then PE4 can forward the downlink data to PE2 through PW4. After PE2 receives the downlink data, because AC2 is in a blocked state at this time, PE2 cannot forward the data to CE1 through AC2. However, PE2 may forward the data to PE1 through DATA_CHANNEL2. After PE1 receives the data through DATA_CHANNEL2, because DATA_CHANNEL2 is used for downlink protection, PE2 may be informed of that the data is sent from a PW side, and PE2 automatically forwards the data to CE1 through AC1 accordingly. Certainly, data from PE3 to CE1 may be forwarded through the original PW1 and AC1.

It can be seen that, by using the method in the embodiment of the present invention, when a PW connected to the PE fails, the data may be further normally forwarded.

It can be seen from the above cases that, when PE1 and PE2 forward data through the data channel, if the data is sent from the PW side, the data channel DATA_CHANNEL2 for downlink protection is used; and if the data is sent from the AC side, the data channel DATA CHANNEL1 for uplink protection may be used.

In this way, PE1 and PE2 can determine whether to forward the data received through the data channel for protection to the PW side or the AC side. For example, if PE1 receives the data through DATA_CHANNEL1, PE1 determines that the data is sent from the AC side, and further determine that the data should be forwarded to the PW side in the subsequent forwarding, and vice versa.

Certainly, in other embodiments, the above purpose may also be achieved by adopting other manners. For example, merely one data channel for PW protection and for AC protection exists. At this time, when PE1 or PE2 needs to forward data through the data channel, an identifier of a receiving end or an identifier of a sending end needs to be carried. In this way, after PE1 or PE2 receives the data through the data channel, PE1 or PE2 may determine a side to which the data should be forwarded according to the identifier of the sending end or the identifier of the receiving end.

In the case shown in FIG. 4, when a data channel for link protection is established, likewise, an in-band manner or an out-of-band manner may also be used. For example, in the out-of-band implementation manner, in the specific implementation, ports may be reserved for the data channel for link protection on PE1 and PE2, and an LMP protocol may be executed between PE1 and PE2. PE1 and PE2 mutually learn interface mapping through the LMP, and in this way, when a data channel is established through an extended ICCP protocol, information of a local port is carried to a peer end, and then the peer end may be informed of which local port corresponds to the port carried in the packet. Taking the situation that a PW is used to establish the data channel as an example, a process of establishing the data channel is illustrated below.

The process may include the following steps:
Step 1: PE1 and PE2 each send a connect packet to a peer end through the ICCP protocol, and after completing sending the connect packet to the peer end and receiving a connect packet from the peer end, the ICCP channel becomes available.
Step 2: After the ICCP channel is available, PE1 and PE2 may synchronously configure LACP protocol data on the peer end through the ICCP protocol, and then synchronize data related to a state machine; through the synchronization process, PE1 and PE2 select a device on which an AC is in an active (Active) state.

### Step 1 and step 2 may be completed by using a protocol in the prior art.

Step 3: After the synchronization of the LACP protocol data is completed, if the device supports establishing a data channel for link protection, the device sends a request for establishing a data channel for link protection to the peer end, where the request packet carries information of the data channel to be established, for example, including a type of the data channel to be established. The type of the data channel is used to indicate the data channel is established for uplink protection or for downlink protection.
Step 4: If the peer end also supports establishing the data channel, a response packet may carry "support establishing" information; and if the peer end does not support establishing the data channel, the packet may be abandoned, and the data channel cannot be established.
Step 5: If an IP channel is established by using an out-of-band manner, PE1 and PE2 each may reserve a port, and mutually learn interface mapping through the LMP protocol, thereby completing automatic establishing of the data channel for link protection.

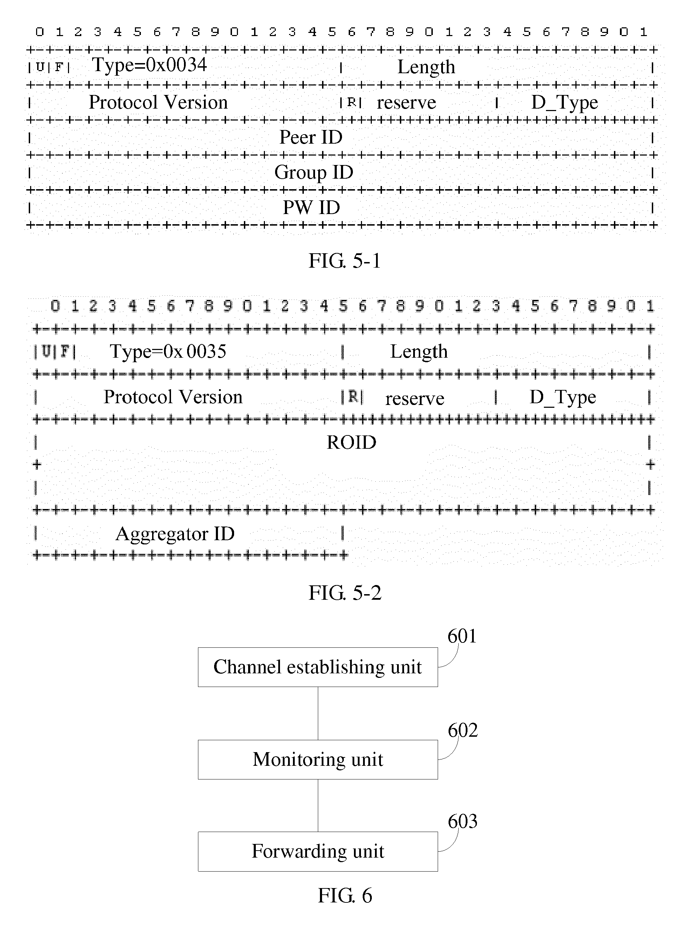

In addition, the embodiment of the present invention further provides a format of a request packet for establishing the data channel, where a format of a request packet used in the establishing a data channel for downlink protection is shown in FIG. 5-1, and a format of a request packet used in the establishing a data channel for uplink protection is shown in FIG. 5-2. For an R field, 1 represents a data channel establishing request packet, and 0 represents a reply packet and indicates the support for establishing the data channel. For a D_Type field, 1 represents establishing a data channel for downlink protection, and 2 represents establishing a data channel for uplink protection. Certainly, the request packet may also adopt other formats, which is not limited herein.

Corresponding to the method for forwarding data provided by the embodiment of the present invention, an embodiment of the present invention further provides an apparatus for forwarding data, applied to a layer 2 virtual private network system, where the layer 2 virtual private network system includes a service provider network edge router PE and a customer edge device CE, and an active PE and a standby PE form a cross-node redundancy group RG. As shown in FIG. 6, the apparatus includes:
a channel establishing unit 601, configured to automatically establish a data channel for link protection between the active PE and the standby PE;
a monitoring unit 602, configured to monitor a link for current data transmission; and
a forwarding unit 603, configured to forward data through the standby PE and the data channel for link protection when the link for current data transmission fails.

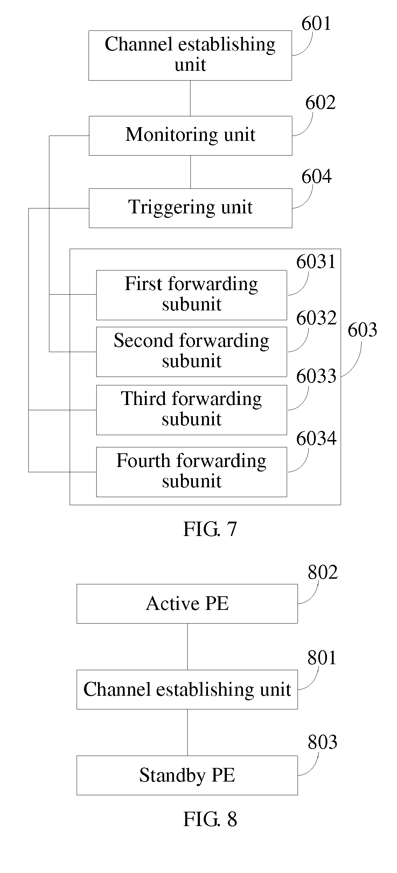

When a link between the CE and the PE fails, referring to FIG. 7, the forwarding unit 603 may further include:
a first forwarding subunit 6031, configured to, if downlink data needs to be forwarded, forward the downlink data to the standby PE through the data channel, so that a peer PE transmits the downlink data to the CE; and
a second forwarding subunit 6032, configured to, if uplink data needs to be forwarded, receive the uplink data forwarded by the standby PE through the data channel, and forward the uplink data to a remote PE.

When the link between the PE and the remote PE fails, the apparatus further includes:
a triggering unit 604, configured to trigger activation of a link between the remote PE and the standby PE.

Correspondingly, the forwarding unit 603 may include:
a third forwarding subunit 6033, configured to, if downlink data needs to be forwarded, receive the uplink data forwarded by the standby PE through the data channel, and forward the downlink data to the CE, where the downlink data is forwarded by the remote PE to the standby PE through the link between the remote PE and the standby PE; and
a fourth forwarding subunit 6034, configured to, if uplink data needs to be forwarded, forward the uplink data to the standby PE through the data channel, so that the peer PE forwards the uplink data to the remote PE through the link between the remote PE and the standby PE.

For the convenience of distinguishing the uplink data and the downlink data, the data channel for link protection may include: a data channel for uplink protection and a data channel for downlink protection. Correspondingly, the forwarding unit 603 may include:
an uplink forwarding subunit, configured to forward uplink data to the standby PE through the data channel for uplink protection; and
a downlink forwarding subunit, configured to forward downlink data to the standby PE through the data channel for downlink protection.

In addition, in order to prevent the situation that the data channel for link protection fails and the data cannot be normally forwarded, the apparatus may further include:
a standby channel establishing unit, configured to establish, between the active PE and the standby PE, a standby data channel for the data channel for link protection; and
a switching unit, configured to, when the data channel for link protection fails, trigger the forwarding unit to forward data through the standby PE and the standby data channel.

Corresponding to the method and apparatus for forwarding data provided by the embodiments of the present invention, an embodiment of the present invention further provides a system for forwarding data, including a service provider network edge router PE and a customer edge device CE. Referring to FIG. 8, an active PE 801 and a standby PE 802 form a cross-node redundancy group RG, and the system includes:
a channel establishing unit 801, configured to automatically establish a data channel for link protection between the active PE and the standby PE;
the active PE 802, configured to monitor a link for current data transmission, and forward data through the standby PE and the data channel for link protection when the link for current data transmission fails; and
the standby PE 803, configured to forward received data according to a current link state, so as to assist the active PE in completing data forwarding.

When a link between the CE and the active PE fails, and downlink data needs to be forwarded, the active PE includes a first forwarding unit, configured to forward the downlink data to the standby PE through the data channel; and the standby PE includes a second forwarding unit, configured to forward the downlink data to the CE through a link between the CE and the standby PE.

When the link between the CE and the active PE fails, and uplink data needs to be forwarded, the standby PE includes a third forwarding unit, configured to receive the uplink data forwarded by the CE through the link between the CE and the standby PE, and forward the uplink data to the active PE through the data channel; and the active PE includes a fourth forwarding unit, configured to forward uplink data to a remote PE through a link between the remote PE and the active PE.

When the link between the active PE and the remote PE fails, the apparatus further includes:
an activation unit, configured to activate a link between the remote PE and the standby PE.

If downlink data needs to be forwarded, the standby PE includes a fifth forwarding unit, configured to receive the downlink data forwarded by the remote PE through the link between the remote PE and the standby PE, and forward the downlink data to the active PE through the data channel; and the active PE includes a sixth forwarding unit, configured to forward the downlink data to the CE through the link between the CE and the active PE.

If uplink data needs to be forwarded, the active PE includes a seventh forwarding unit, configured to forward the uplink data to the standby PE through the data channel; and the standby PE includes an eighth forwarding unit, configured to forward the uplink data to the remote PE through the link between the remote PE and the standby PE.

Persons of ordinary skill in the art should understand that all or a part of the steps of the method according to the embodiments of the present invention may be implemented by a program instructing relevant hardware. The program may be stored in a computer readable storage medium. When the program is run, the steps of the method according to the embodiments of the present invention are performed. The storage medium may be any medium that is capable of storing program codes, such as a ROM, a RAM, a magnetic disk, and an optical disk.

The above embodiments are merely provided for describing the technical solutions of the present invention, but not intended to limit the present invention. It should be understood by persons of ordinary skill in the art that although the present invention has been described in detail with reference to the embodiments, modifications can be made to the technical solutions described in the embodiments, or equivalent replacements can be made to some technical features in the technical solutions, as long as such modifications or replacements do not depart from the spirit and scope of the present invention.

## Claims

1. A method for forwarding data, applied to a layer 2 virtual private network system, wherein the layer 2 virtual private network system comprises a service provider network edge router PE and a customer edge device CE, an active PE and a standby PE form a cross-node redundancy group RG, and the method comprises:
establishing a data channel for link protection between the active PE and the standby PE;
monitoring a link for current data transmission; and
when the link for current data transmission fails, forwarding data through the standby PE and the data channel for link protection;
wherein, the forwarding the data through the standby PE and the data channel for link protection when the link for current data transmission fails comprises:
if downlink data needs to be forwarded, forwarding the downlink data to the standby PE through the data channel, so that the standby PE transmits the downlink data to the CE; and
if uplink data needs to be forwarded, receiving the uplink data forwarded by the standby PE through the data channel, and forwarding the uplink data to a remote PE.

2. The method according to claim 1, wherein when a link between the active PE and the remote PE fails, the method further comprises: triggering activation of a link between the remote PE and the standby PE; and the forwarding the data through the standby PE and the data channel for link protection comprises:
if downlink data needs to be forwarded, receiving the uplink data forwarded by the standby PE through the data channel, and forwarding the downlink data to the CE, wherein the downlink data is forwarded by the remote PE to the standby PE through the link between the remote PE and the standby PE; and
if uplink data needs to be forwarded, forwarding the uplink data to the standby PE through the data channel, so that the standby PE forwards the uplink data to the remote PE through the link between the remote PE and the standby PE.

3. The method according to claim 1 or 2, wherein the data channel for link protection comprises: a data channel for uplink protection and a data channel for downlink protection; and the forwarding the data through the standby PE and the data channel for link protection comprises:
Forwarding uplink data to the standby PE through the data channel for uplink protection; and
forwarding downlink data to the standby PE through the data channel for downlink protection.

4. The method according to claim 1 or 2, further comprising:
establishing, between the active PE and the standby PE, a standby data channel for the data channel for link protection; and
when the data channel for link protection fails, forwarding data through the standby data channel.

5. The method according to claim 1 or 2, wherein the data channel for link protection is independent of a path for execution of an Inter-Chassis Communication Protocol ICCP.

6. An apparatus for forwarding data, applied to a layer 2 virtual private network system, wherein the layer 2 virtual private network system comprises a service provider network edge router PE and a customer edge device CE, an active PE and a standby PE form a cross-node redundancy group RG, and the apparatus comprises:
a channel establishing unit, configured to establish a data channel for link protection between the active PE and the standby PE;
a monitoring unit, configured to monitor a link for current data transmission; and
a forwarding unit, configured to forward data through the standby PE and the data channel for link protection when the link for current data transmission fails;
wherein, when a link between the CE and the active PE fails, the forwarding unit comprises:
a first forwarding subunit, configured to, if downlink data needs to be forwarded, forward the downlink data to the standby PE through the data channel, so that the standby PE transmits the downlink data to the CE; and
a second forwarding subunit, configured to, if uplink data needs to be forwarded, receive the uplink data forwarded by the standby PE through the data channel, and forward the uplink data to a remote PE.

7. The apparatus according to claim 6, wherein when a link between the active PE and the remote PE fails, the apparatus further comprises:
a triggering unit, configured to trigger activation of a link between the remote PE and the standby PE;
the forwarding unit comprises:
a third forwarding subunit, configured to, if downlink data needs to be forwarded, receive the uplink data forwarded by the standby PE through the data channel, and forward the downlink data to the CE, wherein the downlink data is forwarded by the remote PE to the standby PE through the link between the remote PE and the standby PE; and
a fourth forwarding subunit, configured to, if uplink data needs to be forwarded, forward the uplink data to the standby PE through the data channel, so that the standby PE forwards the uplink data to the remote PE through the link between the remote PE and the standby PE.

8. The apparatus according to claim 6 or 7, wherein the data channel for link protection comprises: a data channel for uplink protection and a data channel for downlink protection; and the forwarding unit comprises:
an uplink forwarding subunit, configured to forward uplink data to the standby PE through the data channel for uplink protection; and
a downlink forwarding subunit, configured to forward downlink data to the standby PE through the data channel for downlink protection.

9. The apparatus according to claim 6 or 7, further comprising:
a standby channel establishing unit, configured to establish, between the active PE and the standby PE, a standby data channel for the data channel for link protection; and
a switching unit, configured to, when the data channel for link protection fails, trigger the forwarding unit to forward data through the standby PE and the standby data channel.

10. A system for forwarding data, comprising a service provider network edge router PE and a customer edge device CE, wherein an active PE and a standby PE form a cross-node redundancy group RG, and the system comprises:
a channel establishing unit, configured to establish a data channel for link protection between the active PE and the standby PE;
the active PE, configured to monitor a link for current data transmission, and forward data through the standby PE and the data channel for link protection when the link for current data transmission fails; and
the standby PE, configured to forward received data according to a current link state, so as to assist the active PE in completing data forwarding;
wherein, when a link between the CE and the active PE fails, and downlink data needs to be forwarded, the active PE comprises a first forwarding unit, configured to forward the downlink data to the standby PE through the data channel; and the standby PE comprises a second forwarding unit, configured to forward the downlink data to the CE through a link between the CE and the standby PE; and
when the link between the CE and the active PE fails, and uplink data needs to be forwarded, the standby PE comprises a third forwarding unit, configured to receive the uplink data forwarded by the CE through the link between the CE and the standby PE, and forward the uplink data to the active PE through the data channel; and the active PE comprises a fourth forwarding unit, configured to forward the uplink data to a remote PE through a link between the remote PE and the active PE.

11. The system according to claim 10, wherein when the link between the active PE and the remote PE fails, the system further comprises:
an activation unit, configured to activate a link between the remote PE and the standby PE;
if downlink data needs to be forwarded, the standby PE comprises a fifth forwarding unit, configured to receive the downlink data forwarded by the remote PE through the link between the remote PE and the standby PE, and forward the downlink data to the active PE through the data channel; and the active PE comprises a sixth forwarding unit, configured to forward the downlink data to the CE through the link between the CE and the active PE; and
if uplink data needs to be forwarded, the active PE comprises a seventh forwarding unit, configured to forward the uplink data to the standby PE through the data channel; and the standby PE comprises an eighth forwarding unit, configured to forward the uplink data to the remote PE through the link between the remote PE and the standby PE.
